# EUROPEAN PATENT APPLICATION

(11) **EP 3 007 403 A1**
(43) Date of publication of application: **13.04.2016**
(21) Application number: 14306574.6
(22) Date of filing: 08.10.2014
(51) Int. Cl.: H04L 29/06, H04L 29/08, H04W 4/02

(54) **Data transmission method, intermediary device, server and data transmission system**

(71) Applicant: Thomson Licensing, 92130 Issy-les-Moulineaux (FR)
(72) Inventor: Le Scouarnec,Nicolas, 35576 Cesson-Sévigné (FR); Neumann, Christoph, 35576 Cesson-Sévigné (FR); Straub, Gilles, 35576 Cesson-Sévigné (FR)
(74) Representative: Huchet, Anne

(57) **Abstract**

There is provided a method for data transmission, comprising: determining a list of data objects to be cached, wherein the data objects have been encrypted; caching the data objects; and transmitting at least one data object cached in the intermediary device to a client in response to a request for the at least one data object from the client, wherein the request from the client is intended for a server that provides the at least one data object.

## Description

### TECHNICAL FIELD

The present disclosure relates to data communication, particularly to a data transmission method, an intermediary device, a server and a data transmission system comprising the intermediary device and/or the server.

### BACKGROUND

As known, Hypertext Transfer Protocol Secure (HTTPS) is a communication protocol for secure communication over a computer communication network, with especially wide deployment on the Internet. Technically, it is the result of simply layering the Hypertext Transfer Protocol (HTTP) on top of the Secure Socket Layer/Transport Layer Security (SSL/ TLS) protocol, thus adding the security capabilities of SSL/TLS to the standard HTTP communication. In its popular deployment on the internet, HTTPS provides authentication of the website and associated web server that a client is communicating with, which protects against man-in-the-middle attacks. Additionally, it provides bidirectional encryption of communication between a client and a server, which protects against eavesdropping and tampering with and/or forging the content of the communication. In practice, this provides a reasonable guarantee that a client is communicating with precisely the website that it is intended to communicate with (as opposed to an imposter), as well as ensuring that the content of communication between the client and server can not be read or forged by any third party. In fact, HTTPS is a URI scheme which has identical syntax to the standard HTTP scheme, aside from its scheme token. However, HTTPS signals the browser to use an added encryption layer of SSL/TLS to protect the traffic, and thus HTTPS creates a secure channel over an insecure network. This ensures reasonable protection from eavesdroppers and man-in-the-middle attacks, provided that an adequate cipher mechanism is used and that the server certificate is verified and trusted (please refer to http://en.wikipedia.org/wiki/HTTPS). As a web-based application, HTTPS has a support for an offline mode (either built upon HTML5 storage, or local storage for a native application) and such a web application presents the user with some contents that are updated frequently. The application gets the contents as required from remote servers in HTTPS which guarantees that the contents remain confidential and unaltered; however, HTTPS prevents the contents from being cached in an HTTP proxy or shared between different users, thus suffering from latency/WAN link bandwidth.

Therefore, it is desired to provide a scheme that can be compatible with the HTTP-based applications/HTML5 applications and allows caching (and even pre-fetching) data blobs (e.g., large binary data objects) while guaranteeing data confidentiality and integrity. Further, such a scheme should allow implementing proper access control.

### SUMMARY

The inventors note that in the classical caching (e.g., server-side CDN/proxy or client-side HTTP proxy), a client sends a request for acquiring data to a proxy/CDN, and in response to the request, the proxy/CDN either transmits the corresponding data from its local cache to the client, or forwards the request to an upstream server; in the latter case, the upstream server would supply the corresponding data to the client; wherein, the data objects stored in the proxy/CDN are ones which the client would have obtained from the upstream server. When a security is needed, the SSL/TLS is used and the connection is secured; nevertheless, the proxy is forced to act as a simple relay that cannot cache/seme any request. In view of this, the inventors propose a scheme in which the client asks the upstream server (possibly over HTTPS) for data object IDs and corresponding encryption/authentication keys. An intermediary device (e.g., a gateway, a local caching server, or a proxy server) periodically refreshes a list of data objects it holds by sending a request for new contents to the upstream server. Rather than sending the requested data objects directly, the upstream server ciphers the data objects and replies to the intermediary device with the ciphered data objects. When the client wants to obtain a data object, it tries to get the ciphered object from the local cache of the intermediary device and to decipher it; if it fails, the client tries to get it from the upstream server.

In the proposed scheme, the use of cryptography allows using an intermediary device that is not a part of a trusted domain as a cache; actually, the concept of the disclosure stems from the existing CDN/proxy architecture, and thus it is well compatible with the existing web-based architectures.

Optionally, the intermediary device can be a gateway, a proxy server, or a local caching server.

According to one aspect of the present principle, it is provided a data transmission method, comprising: determining a list of data objects to be cached, wherein the data objects have been encrypted; caching the data objects; and transmitting at least one data object cached in the intermediary device to a client in response to a request for the at least one data object from the client, wherein the request from the client is intended for a server that provides the at least one data object.

According to another aspect of the present principle, it is provided an intermediary device comprising: an acquisition unit configured to acquire encrypted data objects from a server; a cache unit configured to cache the encrypted data objects; and a transmission unit configured to transmit at least one data object as cached to a client in response to a request for the at least one data object from the client, wherein the request from the client is intended for the server that provides the at least one data object.

According to still another aspect of the present principle, it is provided a server, comprising: a processor unit configured to compute a list of data objects to be cached; an encryption unit configured to encrypt the data objects; and a transmission unit configured to transmit the encrypted data objects to an intermediary device so that the data objects are cached in the intermediary device.

According to yet another aspect of the present principle, it is provided a data transmission system, comprising at least one of the intermediary device and the server as described above.

These and other aspects, features and advantages of the present principle will become apparent from the following detailed description of exemplary embodiments, which is to be read in connection with the accompanying drawings.

### BRIEF DESCRIPTION OF THE DRAWINGS

The present principle may be better understood when reading the description as follows in accordance with the following exemplary figures, in which:
Fig. 1 is a schematic communication architecture to which the present principle can be applied;
Fig. 2 is an exemplary diagram illustrating a communication session between a client and a server over a HTTPS connection;
Fig. 3 is an exemplary diagram illustrating a communication session between a client and a server through a gateway in accordance with an embodiment of the disclosure;
Fig. 4 is a schematic flowchart illustrating a procedure of an exemplary data transmission method in accordance with an embodiment of the disclosure;
Fig. 5 is a schematic diagram showing a part of a communication session adopted in a geo-location based variant in accordance with an embodiment of the disclosure;
Fig. 6 is a schematic block diagram showing a configuration of an exemplified intermediary device to which the present principle can be applied according to an embodiment of the disclosure; and
Fig. 7 is a schematic block diagram showing a configuration of an exemplified server to which the present principle can be applied according to an embodiment of the disclosure.

### DETAILED DESCRIPTION

To illustrate the technical solutions of the present principle clearly and fully, hereinafter, detailed description will be made to the embodiments of the present principle in connection with the accompanying drawings. It should be appreciated that those skilled in the art will be able to devise various arrangements that, although not explicitly described or shown herein, embody the inventive concept of the present principle and are included within its scope.

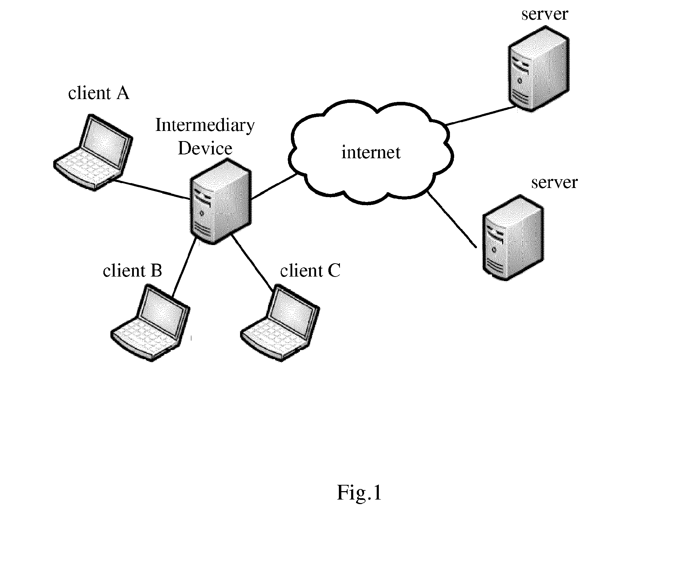

Fig. 1 shows a typical structure of a communication architecture to which the present principle can be applied, wherein a plurality of clients is connected to an intermediary device, and the intermediary device is further connected to a plurality of servers via a communication network (e.g. Internet). It is appreciated for those skilled in the art that as an example, the number of the clients, the intermediary device and the servers are only illustrative, and thus the present principle is not limited to this. As desired, a HTTP connection or a HTTPS connection can be established between the intermediary device and the server. Further, the intermediary device can also be another device on a LAN/WAN (e.g. a device which is close to the client).

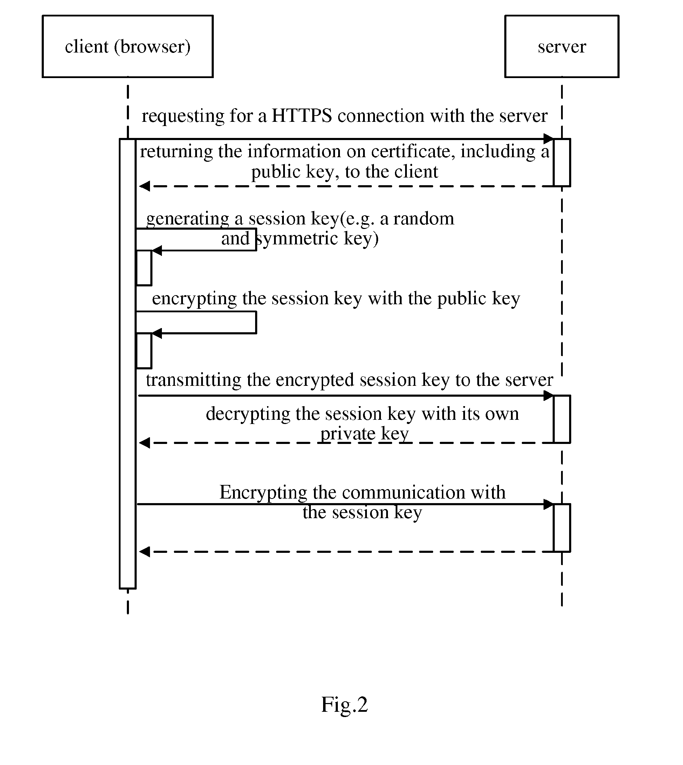

Fig. 2 illustrates a conventional communication session between a client and a server via a HTTPS connection. As shown in Fig. 2, firstly, a client(e.g. a browser) uses a URL to access to a server(e.g., a web-based server) and requests for establishing a HTTPS connection with the server; in response to the request, the server returns the information on certificate, including a public key, to the client; then, the client negotiates with the server over a security level of the HTTPS connection, and generates a session key(e.g. a random and symmetric key) based on the security level; the client encrypts the session key with the public key and transmits the encrypted session key to the server; after receiving the encrypted session key, the server decrypts the session key with its own private key, and encrypts the communication with the session key.

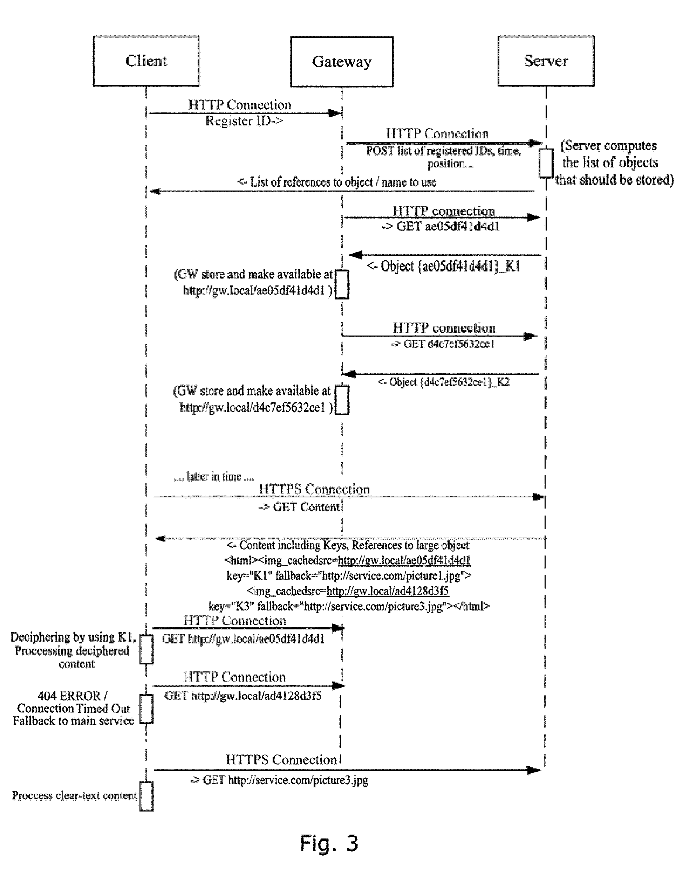

Hereinafter detailed description will be given to the proposed caching scheme with reference to Fig. 3 which is capable of being applied to the existing client/server architecture. Fig. 3 illustrates an exemplary diagram showing a communication session between a client and a server through a gateway in accordance with an embodiment of the disclosure. It should be noted that in Fig. 3, the gateway is taken as an example for illustration; in fact, a proper intermediary device, such as a proxy server, a local caching server, and any other devices which can cache data objects from a upstream server and transmit the cached data objects to a client in response to the request from the client, can be used in the embodiments of the disclosure. As shown in Fig. 3, the client finds its local gateway by sending a request to the local gateway. The request fails (failed DNS resolution/failed connection) in a case that the client is not connected to a network having a gateway supporting the protocol; otherwise, the client establishes a HTTP connection with the gateway, and registers with the gateway. Then, the registered client can send its registration ID to the gateway. In an example, the ID is possibly encrypted by means of a public key which is generated or signed by the server. Then, the gateway periodically transmits the information on the client, including the registration ID, time, position of the clients which have recently accessed to the gateway, and the like, to the server. Then, the server computes a list of data objects that should be stored in the gateway and encrypts the data objects to be stored with its own private keys respectively, wherein the private keys are preferably symmetric and each is for one of the data objects; the key could be a randomly generated key or a hash of the data objects (as done in the convergent encryption). In an example, the gateway pre-fetches ciphered versions of all the data objects listed based on the information on the recently seen clients. The gateway caches these data objects and makes them publicly available. Since the data objects have been encrypted, a client needs decryption keys to recover the clear-text of the data objects even if the data objects are publicly available. On the other hand, in view of the limited capacity of the cache of the gateway, when it is necessary, old data objects, less accessed data objects or less popular objects are removed from the cache of the gateway.

Next, when a client requests for a main service provided by one or more servers (e.g., acquisition of the data objects), it gets a description of contents with reference to the ciphered data objects cached in the local gateway, the associated decryption keys(generated by the server), and fallback pointers(containing authentication information as necessary, e.g., when the signed URLs are used) to the remote objects in the upstream server (in case there is no local gateway accessible, or the required data objects are not available on the current local gateway). The client then tries to acquire the data objects from the cache of the local gateway, and if the requested data objects are available in the local gateway, the client retrieves the encrypted data objects cached on the local gateway, and deciphers the encrypted data objects and processes them; otherwise, the client fetches the data objects from the upstream server by using fallback pointers and processes the fetched data objects. It should be noted that the data objects can be transferred either in a ciphered version over a HTTP connection or in a clear-text version over a HTTPS connection.

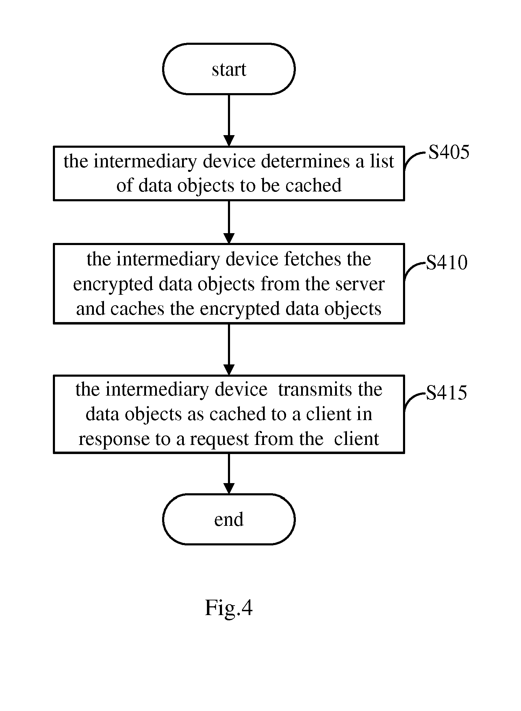

Fig. 4 illustrates a flow of an exemplary data transmission method in accordance with an embodiment of the disclosure. As shown in Fig. 4, at step 405, the server computes a list of data objects to be cached and encrypts the data objects. And correspondingly, the gateway determines the list of encrypted data objects to be cached; at step 410, the gateway fetches the encrypted data objects from the server and caches the encrypted data objects; and at step 415, the gateway transmits the data objects as cached to one or more clients in response to a request from the one or more clients. As mentioned above, the gateway is taken as an example for illustration; in fact, a proper intermediary device, such as a proxy server, a local caching server, and any other devices can be used in the embodiments of the disclosure.

In an example, firstly, a client establishes a HTTP connection with a gateway and registers with the gateway; thus, the gateway obtains information about the client, such as registration ID, connection time, position and the like. Then, the gateway establishes a HTTP connection with the server and transmits the information about the client together with the information about itself to the server, wherein the information about the gateway comprises history of being accessed by the client, frequency of the respective data objects as cached being accessed by the client, a list of Ids of the data objects cached currently in the gateway, storage capacity, access bandwidth, and the like; wherein the information about the client and/or the information about the gateway can be encrypted using public keys generated or signed by the server; thus, the server can compute a list of the data objects to be stored in the gateway based on the information about clients and/or the information about the gateway, and encrypts the data objects to be stored with its private keys, wherein the private keys can be symmetric keys ideally, and each key corresponds to each of the data objects; the key could be a randomly generated key, or a hash of the data object, similar to that in the convergent encryption. When the gateway obtains the encrypted data objects from the server via a HTTP connection, it makes them available to the clients to which it is connected. In a case in which a client requests for a main service(e.g. acquisition of the data objects), it obtains from the server via a HTTPS connection a list of references to the data objects cached in the gateway, decryption keys associated with the encrypted data objects, and fallback pointers. Then, if the requested data objects are available on the gateway, the client retrieves the data objects from the gateway via a HTTP connection, decrypts the encrypted data objects with the decryption keys respectively, and processes the deciphered content of the data objects. If the data objects are not available in the gateway, the client uses the fallback pointers to retrieve the data objects from the server via a HTTPS connection, and processes a clear-text content of the data objects. As mentioned above, the data objects can be transferred either in a ciphered version over a HTTP connection or in a clear-text version over a HTTPS connection.

For the update of the data objects cached in the gateway, there are mainly two modes according to embodiments of the disclosure. In an example, a pull mode can be adopted in the proposed scheme when the data objects cached in the gateway need to be updated. That is, the gateway obtains the data objects from the server by sending a request to the server. In an implementation, the pull mode might be preferable. Indeed, the gateways (e.g., the caching servers) are likely to be numerous, and they are connected to the Internet using slow/intermittent/dynamically-addressable connections. Hence, it is better to have the gateways send the request for the main service to the servers when the gateways desire to update the data objects cached therein. This allows the update of the data objects cached in the gateways to be scheduled by themselves, and simplifies the management as the gateways automatically connects to the main service when they need to update the data objects cached therein and it is unnecessary to keep track of the gateways.

In the pull mode, the gateway reports to the server a set of information about the clients that connect to it and/or the information it holds. The information includes registration IDs of the clients and their frequency/history of accesses, frequency of access to the data objects, a list of IDs of the data objects currently stored, or capacities of the gateway such as storage capacity and/or bandwidth. As a response, the gateway obtains either a concatenation of all blobs (multipart/encoded), or a list of references to the blobs to be downloaded (e.g., JSON, XML, TXT) together with the unique ID (e.g., SHA256 of the content). Then, the gateway stores each of the blobs, or fetches the blobs by using the list of the references to the blobs and stores the fetched blobs.

As an alternative, a push mode can be adopted in the proposed scheme when the data objects cached in the gateway need to be updated. The push mode can avoid periodical connections from the gateways (even if they do not need to update their contents) by having the server remember their addresses and supply them with new data objects to be cached voluntarily.

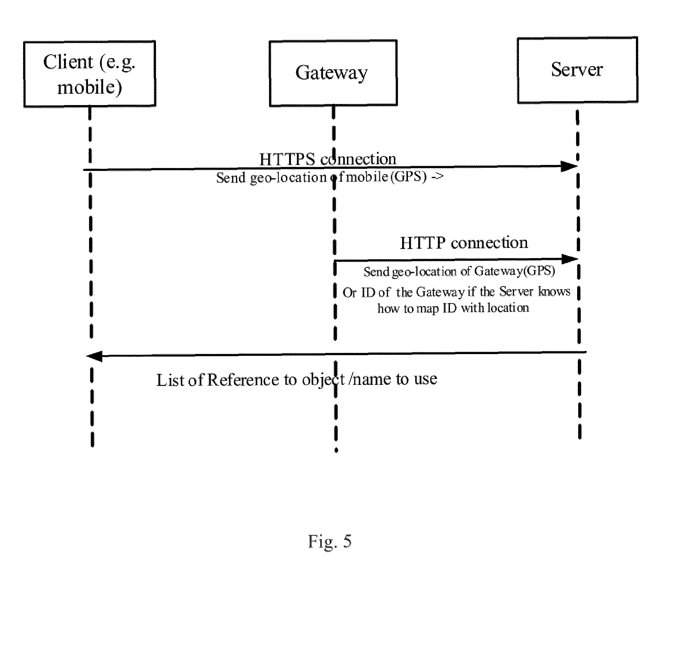

Further, a geo-location based mode is provided according to an aspect of the present disclosure. Rather than registering the client with the gateway when the client is firstly connected to the gateway, the connectivity may be inferred by the server provided that the geo-location of the gateway and the geo-location of the client (e.g., a mobile phone) are known to the server. In an example, the client (e.g. the mobile phone) uses 3G communication to periodically report its position, and the server then utilizes a location scheme for deriving the connectivity of the client so as to help the client obtain its data quickly. In particular, as shown in Fig. 5, a client sends the information about its geo-location (e.g. obtained by GPS) to the server via a HTTPS connection, and the gateway sends the information about its geo-location (e.g. obtained by GPS) to the server via a HTTP connection. Then, as a response, the server provides a list of references to the data objects to be cached in the gateway to the client. Optionally, the gateway can send the information on its ID rather than the information about its geo-location to the server if the server knows how to map the ID to the location of the gateway. In the present variant, except that the connectivity of the client and/or the gateway is inferred in a different way, the specific procedure of the communication session is similar to that shown in Fig. 3.

As mentioned above, the encrypted data objects are cached in the gateway and are made available to the client publicly at some URLs (e.g., http://roop.local/d56e4dfgf87ac). The client obtains from the sever the list of references to the data objects cached in the local gateway(e.g., http://roop.local/d56e4dfgf87ac) and fallback pointers (e.g., http://main.semice.com/pict/d475t445d.jpg ). Note that IDs of the data objects cached in the local gateway may coincide with (or may differ from) the IDs of data objects from the server, and the IDs may be linked to the contents (hash of the contents) or may be randomly generated by the server.

Optionally, in the pull mode, the gateway may establish a HTTPS connection with the server from which it desires to obtain data objects and/or a list of references to the data objects, and will check a certificate of the server. Only if the certificate is checked as valid, can the data objects and/or the list of references to the data objects be cached in the gateway.

Optionally, in both cases (the pull mode and the push mode), the gateway may store only the data objects that are signed by a trusted entity, and discard any other data objects, thus improving the security of the data objects by verifying the source of the data objects.

In an example, the server provides decryption keys only to an authorized client. Further, the gateway may require the URL request from the client to be signed properly with a non-expired timestamp (e.g. with an asymmetric key). The above access control mechanism allows saving bandwidth by discarding immediately unauthorized requests while ensuring the confidentiality and security since data is stored and served in a ciphered version.

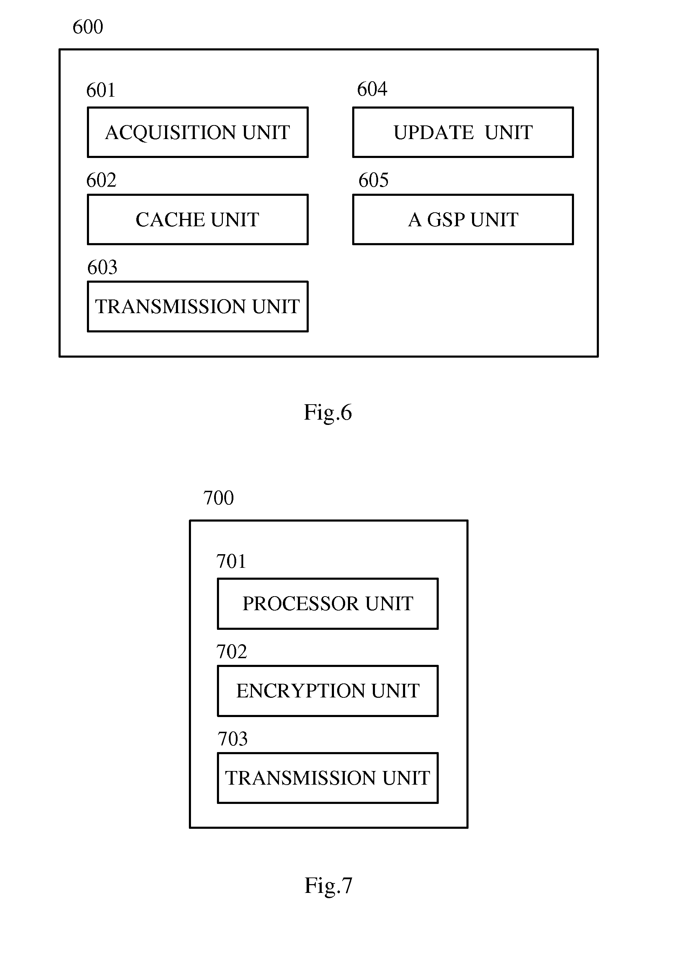

Fig. 6 illustrates a schematic block diagram showing a configuration of an intermediary device for data transmission to which the present principle can be applied according to an embodiment of the disclosure. As shown in Fig. 6, The intermediary device 600 comprises: an acquisition unit 601 configured to acquire data objects from a server; a cache unit 602 configured to cache the data objects acquired from the server; and a transmission unit 603 configured to transmit the cached data objects to one or more clients in response to requests from the one or more clients; wherein the data objects are encrypted in the server before being acquired.

In an example, the acquiring unit 601 is further configured to pre-fetch the encrypted data objects from the server based on recent access of the one or more clients to the intermediary device.

Optionally, the transmission 600 is further configured to forward a list of references to the cached data objects, decryption keys associated with the encrypted data objects, fallback pointers, and the like, to the one or more clients.

In an example, the transmission unit 603 is further configured to transmit information about the intermediary device to the server, wherein the information about the intermediary device comprises access history of clients to the intermediary device, access frequency of the clients to the cached data objects, a list of data objects cached currently in the intermediary device, storage capacity, access bandwidth, and the like.

In an example, the intermediary device 600 further comprises an updating unit 604 configured to update the data objects cached in the intermediary device by sending a request for a list of new data objects to the server or in response to a list of new data objects provided by the server voluntarily.

In an example, the intermediary device 600 further comprises a GPS unit configured to obtain a geo-location of the intermediary device; wherein the transmission unit 603 is further configured to transmit the geo-location of the intermediary device to the server regularly.

Fig. 7 illustrates a schematic block diagram showing a configuration of a server to which the present principle can be applied according to an embodiment of the disclosure. As shown in Fig. 7, the server 700 comprises: a processor unit 701 configured to compute a list of data objects to be cached; an encryption unit 702 configured to encrypt the data objects; and a transmission unit 703 configured to transmit the encrypted data objects to an intermediary device so that the data objects are cached in the intermediary device.

In an example, the transmission unit 703 is configured to transmit a list of references to the data objects cached in the intermediary device, decryption keys associated with the data objects, and fallback pointers to one or more clients over a HTTPS connection.

In an example, the processor unit 701 is configured to compute the list of data objects to be cached in the intermediary device based on information about the intermediary device, wherein the information about the intermediary device comprises access history of the one or more clients to the intermediary device, access frequency of the one or more clients to the cached data objects, a storage capacity of the intermediary device, and the like.

In an example, the processor unit 701 is further configured to determine connectivity based on information on the geo-location of the client and information on the geo-location of the intermediary device.

According to another aspect of the present principle, it is provided a data transmission system comprising at least one of the intermediary device and the server as described above.

As mentioned above, the proposed scheme departs from the classical caching mechanism, and thus can be compatible with the existing server/client architecture. It can be integrated with client-side caching such as Regular caching (based on HTTP headers) and Silo-like caching (http://research.microsoft.com/pubs/131524/paper.pdf ). By implementing the proposed scheme in appropriate HTTP headers, or having the Silo-client use URLs to the pre-fetch service rather than to the main service, the speed for accessing data is expedited while the security and integrity of the data are guaranteed. Further, since the proposed scheme stems from the HTTP-based application, it is compatible with any variation of HTTP such as SDPY/HTTP 2.0, and can be interfaced with HTTPS that becomes omnipresent on the web.

The embodiments of the invention being thus described, it will be obvious that all the embodiments may be varied in many ways. Such variations should not be regarded as a departure from the scope of the invention.

## Claims

1. A method for data transmission, comprising:
determining a list of data objects to be cached, wherein the data objects have been encrypted (S405);
caching the data objects (S410); and
transmitting at least one data object cached in the intermediary device to a client in response to a request for the at least one data object from the client (S415), wherein the request from the client is intended for a server that provides the at least one data object.

2. The method of claim 1, further comprising:
pre-fetching the data objects encrypted in the server to the intermediary device based on the client's recent access to the intermediary device.

3. The method of claim 1 or 2, further comprising:
providing the client with a list of references to the data objects cached in the intermediary device, decryption keys associated with the data objects, and fallback pointers.

4. The method of claim 3, further comprising:
using the fallback pointers to retrieve data objects which are unavailable in the intermediary device from the server.

5. The method of claim 1, further comprising:
transmitting information about geo-location of the client to the server regularly over a HTTPS connection so that the server determines connectivity of the client without registering the client with the intermediary device.

6. Computer program product downloadable from a communication network and/or recorded on a medium readable by computer and/or executable by a processor, comprising program code instructions for implementing the steps of a method according to at least one of claims 1 to 5.

7. Non-transitory computer-readable medium comprising a computer program product recorded thereon and capable of being run by a processor, including program code instructions for implementing the steps of a method according to at least one of claims 1 to 5.

8. An intermediary device for data transmission, comprising:
an acquisition unit (601) configured to acquire encrypted data objects from a server;
a cache unit (602) configured to cache the encrypted data objects; and
a transmission unit (603) configured to transmit at least one data object as cached to a client in response to a request for the at least one data object from the client, wherein the request from the client is intended for the server that provides the at least one data object.

9. The intermediary device of claim 8, wherein the acquisition unit (601) is further configured to pre-fetch the encrypted data objects from the server based on the client's recent access to the intermediary device.

10. The intermediary device of claim 8 or 9, wherein the transmission unit (603) is further configured to forward a list of references to the cached data objects, decryption keys associated with the encrypted data objects, and fallback pointers to the client.

11. The intermediary device of claim 8, further comprising:
an updating unit (604) configured to update the data objects cached in the intermediary device by sending a request for a list of new data objects to the server.

12. The intermediary device of claim 8, further comprising:
a GPS unit (605) configured to obtain information on geo-location of the intermediary device;
wherein the transmission unit (603) is further configured to transmit the information on the geo-location of the intermediary device to the server regularly.

13. A server for data transmission, comprising:
a processor unit (701) configured to compute a list of data objects to be cached;
an encryption unit (702) configured to encrypt the data objects; and
a transmission unit (703) configured to transmit the encrypted data objects to an intermediary device so that the data objects are cached in the intermediary device.

14. The server of claim 13, wherein the transmission unit (703) is further configured to transmit a list of references to the data objects cached in the intermediary device, decryption keys associated with the data objects, and fallback pointers to a client.

15. The server of claim 13, wherein said processor unit (701) is further configured to compute the list of data objects to be cached in the intermediary device based on information about the intermediary device, wherein the information about the intermediary device comprises access history of one or more clients to the intermediary device, access frequency of the one or more clients to the cached data objects, a storage capacity of the intermediary device.
